# EUROPÄISCHE PATENTSCHRIFT

(11) **EP 0 766 941 B1**
(45) Veröffentlichungstag und Bekanntmachung des Hinweises auf die Patenterteilung: **19.05.1999**
(21) Anmeldenummer: 96115263.4
(22) Anmeldetag: 24.09.1996
(51) Int. Cl.: A47G 1/17

(54) **Wiederablösbare, selbstklebende Befestigungs-Vorrichtung**
Releasable self-adhesive fixture
Dispositif de fixation autocollant détachable

(30) Priorität: 06.10.1995 DE 19537323
(43) Veröffentlichungstag der Anmeldung: 09.04.1997
(73) Patentinhaber: Beiersdorf Aktiengesellschaft, 20245 Hamburg (DE)
(72) Erfinder: Dicks, Ralf, 21635 Jork (DE); Lühmann, Bernd, Dr., 22846 Norderstedt (DE); Schwade, Alexander, 22307 Hamburg (DE)

(56) Entgegenhaltungen:
- WO-A-91/06782
- DE-A- 3 205 540
- DE-A- 4 233 872
- US-A- 4 103 860

## Beschreibung

Die Erfindung betrifft eine wiederablösbare, selbstklebende Befestigungs-Vorrichtung, die rückstandsfrei durch Ziehen an der an ihr angeordneten Klebfolie in Richtung der Verklebungsebene aus ihrer Verklebung wieder gelöst werden kann. Insbesondere betrifft die Erfindung einen derartigen Haken.

Solche Vorrichtungen, insbesondere Haken sind bekannt. So beschreibt **DE 42 33 872 C2** einen wiederablösbaren, selbstklebenden Haken, der mit einer auf Zug entklebenden Klebfolie ausgerüstet ist und der als 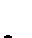 tesa® Power-Strips mit Haken" im Handel erhältlich ist.

Auch aus **WO 94/21157** ist ein solcher Haken bekannt, der sich vom vorgenannten insbesondere durch den Einsatz einer solchen Klebfolie unterschiedet, die hochdehnbar und zugleich nicht rückstellend ist.

Bei dem praktischen Einsatz derartiger Haken können jedoch Probleme auftreten, indem nicht immer die erwünschten Verklebungs-Festigkeiten erreicht werden. Kann man zunächst annehmen, daß dies an den jeweiligen Untergründen liegt auf die diese Haken geklebt werden, so zeigte sich bei näherer Untersuchung jedoch, daß dies nicht die Ursache mancher mangelhafter Verklebungs-Festigkeit sein konnte. Dieser Nachteil ist für die Praxis um so relevanter, als gelegentlich durchaus auch schwerere Lasten mit Hilfe dieser Haken gehalten werden sollen.

Aufgabe der Erfindung war es, hier Abhilfe zu schaffen, insbesondere eine Befestigungs-Vorrichtung zu schaffen, die gut reproduzierbare und hohe Verklebungs-Festigkeiten gewährleistet und dennoch ein problemloses 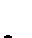 Strippen" der eingesetzten Klebfolien zum rückstandsfreien Trennen des Verbundes ermöglicht.

Gelöst wird diese Abgabe durch die in den Ansprüchen näher gekennzeichneten Befestigungs-Vorrichtungen.

Dabei hat sich gezeigt, daß es anscheinend Lufteinschlüsse beim Verkleben des Streifens Klebfolie auf die glatte Hakenrückseite sind, die zu den eingangs genannten Problemen beitragen. Denn mit erfindungsgemäß ausgerüsteten Haken bzw. Befestigungs-Vorrichtungen mit Luftkanälen werden erstaunlich bessere Werte für Verklebungen erzielt. Offenbar läßt sich auf diese Weise die tatsächliche Verklebungsfläche insbesondere bei niedrigem Anpreßdruck erheblich steigern.

Die erfindungsgemäßen Befestigungs-Vorrichtungen, insbesondere Haken können aus unterschiedlichen Materialien geformt sein, sind bevorzugt jedoch aus spritzgegossenem Kunststoff gefertigt Kanalartige Vertiefungen in der Rückseite, welche der Verdrängung der Luft beim Verkleben dienen, können vertikal, horizontal oder auch ungleichmäßig verlaufen. Eine bevorzugte Anordnung ist die sich im rechten Winkel kreuzender Kanäle. Wesentlich für die Funktion ist, daß die Kanäle über die Verklebungsfläche herausreichen, um den Transport von eingeschlossener Luft zu ermöglichen. In der Praxis zeigt sich, daß Kanäle ca. 0,3-2,5 mm, insbesondere ca. 0,5-1,0 mm in Breite und Tiefe sein sollten, um einen effektiven Transport zu ermöglichen. Höhere Spaltbreiten sind prinzipiell möglich, jedoch wird in diesem Falle die Verklebungsfläche deutlich reduziert. Die Abstände zwischen benachbarten Kanälen sollte nicht höher als ca. 10-20 mm, insbesondere nicht höher als ca. 15 mm betragen.

Spritzgußhaken können aus den üblichen Kunststoffen, wie Polystyrol, Polyamid, Polyethylenterephthalat, Polypropylen, etc. gefertigt sein, um nur einige zu nennen.

Luftkanäle können in einem separaten Arbeitsschritt in die Rückseite eingebracht werden oder bereits in die Spritzgußform integriert sein. Letzteres Verfahren bietet sich insbesondere aus ökonomischen Gesichtspunkten an.

Erfindungsgemäße Klebstoff-Folien sind insbesondere solche entsprechend DE 33 31 016, DE 42 22 849, DE 42 33 872, WO 92/11333 und WO 94/21157.

So beschreibt DE 33 31 016 A1 eine Klebfolie für wiederlösbare Klebbindungen, die es gestattet, daß eine damit hergestellte Klebbindung durch Ziehen an der Klebfolie in Richtung der Verklebungsebene lösbar ist. Mit solchen Klebfolien lassen sich hohe Klebkräfte und Scherfestigkeiten erzielen und Klebverbunde ohne weitere Hilfsmittel wieder lösen, vergleichbar dem Öffnen eines Weckglases, ähnlich wie dort die Gummidichtung am Anfasser aus der Dichtungsfuge gezogen wird.

DE 42 22 849 C1 beschreibt eine derartige Klebfolie mit einem UV-durchlässigen Anfasser.

Auch WO 92/11333 beschreibt unter anderem Klebfolien für entsprechende Anwendungen, wobei die eingesetzten Klebfolien eine geringe Elastizität bei gleichzeitig hoher Dehnung aufweisen.

Auch doppelseitige Selbstklebebänder mit Schaumstoff-Zwischenträger, z.B. aus Polyethylen-Schaum, lassen sich erfindungsgemäß einsetzen. Sind insbesondere die eingesetzten Klebstoff-Folien mit Schaumstoff-Zwischenträger von geringer Dicke und/oder findet ein Schaum mit hoher Härte (geringer Kompressibilität) Verwendung, so können Hakenkörper mit Luftkanälen ebenfalls mit Erfolg zur Steigerung der Verklebungsfläche genutzt werden.

Generell sei zu Herstellung, Verarbeitung und Handhabung von den besonders bevorzugten Klebfolien auf DE 33 31 016, DE 42 22 849 und WO 92/11333 verwiesen.

In den folgenden Beispielen soll die Erfindung anhand von Ausführungsbeispielen beschrieben werden, ohne sie damit unnötig einschränken zu wollen. Alle Teile verstehen sich als Gewichtsteile.

### Beispiel 1a (Vergleichsbeispiel)

Verklebt wird die transparente Basisplatte eines Kunststoffhakens auf eine planare PMMA-Platte. Die Basisplatte bestehend aus transparentem Polystyrol hat die Abmessungen 42,5 mm * 22,5 mm * 4 mm (Höhe * Breite * Tiefe). Die Plattenrückseite ist von guter Planarität: Visuell zeigen Spiegelbilder auf der Plattenrückseite keine merklichen Verformungen. Die Verklebung erfolgt über eine doppelseitig haftklebrige Klebstoff-Folie mit einer Verklebungsfläche von 50 mm * 20 mm, welche an einem schmalen Ende einen durch beidseitiges Aufkaschieren von 12 µm dicker PETP-Folie erhaltenen Anfasser der Abmessungen 14 mm * 20 mm trägt Entsprechende Klebstoff-Folien sind unter dem Markennamen tesa Power-Strip im Markt erhältlich, gemäß dem Beispiel aus DE 33 31 016 C2. Die Klebstoff-Folie wird nach Entfernen eines Trennpapieres manuell auf eine 5 mm dicke planare transparente PMMA-Platte verklebt, wobei visuell eine 100%ige Verklebungsfläche erreicht wird. Nach Entfernung des zweiten Trennpapieres von der Klebstoff-Folie wird die Hakenbasisplatte von Hand mit einem Anpreßdruck von ca. 250 N verklebt Der Versuch wird mehrfach wiederholt. Zwischen Hakenbasisplatte und Klebstoff-Folie werden, bedingt durch den Einschluß von Luftblasen, lediglich Verklebungsflächen von 50% bis 70% der Gesamtfläche der Klebstoff-Folie erreicht.

### Beispiel 1b (erfindungsgemäß)

Im Unterschied zu Beispiel 1a wird eine Hakenbasisplatte benutzt, welche in Abständen von jeweils 7,5 mm zum linken und rechten Plattenrand über die gesamte Plattenlänge eine jeweils 1 mm breite und 1 mm tiefe U-förmige Kerbe trägt. Die Verklebung erfolgt entsprechend Beispiel 1a. Im Gegensatz zu Beispiel 1a werden durchweg Verklebungsflächen von > 95% der Gesamtfläche der Klebstoff-Folie erreicht.

### Beispiel 1c (Vergleich)

Auf eine PMMA-Platte der Abmessung 35 mm * 120 mm * 3 mm (Breite * Länge * Dicke) wird an einem Ende mittig eine doppelseitige Klebstoff-Folie entsprechend Beispiel 1a (Anfasserfolie der Abmessungen 10 mm * 20 mm) derart aufgebracht, daß der Anfasser einseitig über den Rand (einer der kurzen Seiten) der PMMA-Platte herausragt. Eine zweite PMMA-Platte identischer Abmessungen wird derart parallelverschoben mit der ersten Platte verklebt, daß die Platte 10 mm über das Ende der Klebstoff-Folie hinausragt Zur Verklebung wird die zweite PMMA-Platte vertikal auf die Klebstoff-Folie aufgebracht, danach 5 Sekunden mit 100 N angedrückt Die erhaltene Verklebungsfläche beträgt ca. 50%. Der so erhaltene Probekörper wird einem dynamischen Zugscherversuch in Anlehnung an DIN 53283 unterzogen. Die Separationsgeschwindigkeit beträgt 10 mm/min. Der Versuch wird bis zum Bruch der Klebbindung durchgeführt. Als Bruchlast werden 290 Newton ermittelt.

### Beispiel 1d (erfindungsgemäß)

Alternativ zu Beispiel 1c wird als zweite Platte eine PMMA-Platte mit mittiger V-förmiger Kerbe von 1 mm Breite und 0,5 mm Tiefe eingesetzt Die erhaltene Verklebungsfläche liegt bei >90%. Als Bruchlast werden 350 Newton erreicht.

### Beispiel 1e (Vergleich)

Auf eine quadratische aus Stahl bestehende Wandhakenplatte der Abmessungen 40 mm * 40 mm * 3,5 mm wird eine Klebstoff-Folie entsprechend Beispiel 1a derart verklebt, daß der Anfasser über eine der Längsseiten der Stahlplatte herausragt. Nach Ablösen des rückseitigen Trennpapieres der Klebstoff-Folie wird das Laminat aus Wandhakenplatte und Klebstoff-Folie auf eine planare PMMA-Platte entsprechend Beispiel 1c verklebt Der Andruck für die Verklebung beträgt 100 N, die Andruckzeit 5 Sekunden. Die Verklebung wird anschließend einer Kippscherbelastung unterzogen. Hierzu wird rückseitig in die Stahl-Wandhakenplatte - mittig und senkrecht zur Stahlplattenoberfläche - ein Stahlstift eingeschraubt. Bei einem Hebelarm von 50 mm und einer Kippscherlast von 20 N wird eine Haltezeit von 2040±380 min bestimmt

### Beispiel 1f (erfindungsgemäß)

Wird die Verklebung entsprechend Beispiel 1e auf einer gekerbten PMMA-Platte entsprechend Beispiel 1d durchgeführt, erhöht sich die Haltezeit auf 3520±340 min.

## Patentansprüche

1. Wiederablösbare, selbstklebende Befestigungs-Vorrichtung mit einer Bodenplatte, deren Vorderseite zur Befestigung dient und deren Rückseite einen Streifen einer beidseitig klebenden Klebfolie derart aufgeklebt aufweist, daß ein Ende der Klebfolie als Anfasser die Bodenplatte überragt, wobei die Klebfolie eine solche ist, daß die mit ihr erzielte Verklebung durch den Streifen streckendes Ziehen in Richtung der Verklebungsebene wieder lösbar ist,
**dadurch gekennzeichnet, daß** die Rückseite der Bodenplatte in dem Bereich, in dem der Streifen Klebfolie aufgeklebt ist, kanalartige Vertiefungen aufweist, wobei sich diese Vertiefungen zumindest teilweise über den Bereich des Streifens Klebfolie hinaus erstrecken.

2. Vorrichtung nach Anspruch 1, dadurch gekennzeichnet, daß die Vertiefungen vertikal und/oder horizontal oder auch ungleichmäßig über die Rückseite der Bodenplatte verlaufen.

3. Vorrichtung nach Anspruch 1, dadurch gekennzeichnet, daß die Vertiefungen sich etwa rechtwinklig kreuzen.

4. Vorrichtung nach Anspruch 1, dadurch gekennzeichnet, daß die Vertiefungen etwa 0,3-2,5 mm insbesondere 0,5-1,0 mm in der Breite und in der Tiefe messen.

5. Vorrichtung nach Anspruch 1, dadurch gekennzeichnet, daß die Vertiefungen einen Abstand voneinander von maximal etwa 10-20 mm, insbesondere maximal 15 mm haben.

6. Vorrichtung nach Anspruch 1, dadurch gekennzeichnet, daß die Klebfolie mit oder ohne Zwischenträger elastisch oder plastisch dehnbar ist

7. Vorrichtung nach Anspruch 1, dadurch gekennzeichnet, daß die Adhäsion der Klebfolie geringer als die Kohäsion ist, das Haftvermögen beim Dehnen der Folie weitgehend verschwindet, und das Verhältnis von Abzugskraft zu Reißlast mindestens 1 : 1,5 ist, wobei die Klebfolie eine solche auf Basis von thermoplastischem Kautschuk und klebrigmachenden Harzen ist, mit hoher Elastizität und geringer Plastizität.

8. Vorrichtung nach Anspruch 1, dadurch gekennzeichnet, daß das als Anfasser ausgebildete Ende der Klebfolie beidseits mit einer Abdeckung versehen ist

9. Vorrichtung nach Anspruch 1, dadurch gekennzeichnet, daß die Rückseite der Klebfolie mit einem Trennlaminat, wie einem silikonisierten Trennpapier oder einer Trennfolie, abgedeckt ist

10. Vorrichtung nach Anspruch 1, dadurch gekennzeichnet, daß sich an der Vorderseite der Bodenplatte ein Haken befindet.

11. Verwendung einer Bodenplatte für eine Befestigungs-Vorrichtung nach einem der Ansprüche 1-10, wobei die Rückseite der Bodenplatte in dem Bereich, in dem der Streifen Klebfolie aufgeklebt ist, kanalartige Vertiefungen aufweist, wobei sich diese Vertiefungen zumindest teilweise über den Bereich des Streifens Klebfolie hinaus erstrecken.

## Claims

1. Redetachable, self-adhesive fastening device having a base plate, the front side of which serves for fastening and the rear side of which has a strip of an adhesive film which is adhesive on both sides and is adhesively attached in such a way that one end of the adhesive film protrudes beyond the base plate as a grip, the adhesive film being of such a kind that the adhesive bond achieved with it can be released again by pulling in the direction of the adhesive bonding plane, stretching the strip, characterized in that the rear side of the base plate has duct-like depressions in the region in which the strip of adhesive film is adhesively attached, these depressions extending at least partially beyond the region of the strip of adhesive film.

2. Device according to Claim 1, characterized in that the depressions run vertically and/or horizontally or else nonuniformly over the rear side of the base plate.

3. Device according to Claim 1, characterized in that the depressions cross one another approximately at right angles.

4. Device according to Claim 1, characterized in that the depressions measure about 0.3-2.5 mm, in particular 0.5-1.0 mm, in width and in depth.

5. Device according to Claim 1, characterized in that the depressions have a spacing from one another of at most about 10-20 mm, in particular at most 15 mm.

6. Device according to Claim 1, characterized in that the adhesive film, with or without an intermediate substrate, is elastically or plastically extensible.

7. Device according to Claim 1, characterized in that the adhesion of the adhesive film is less than the cohesion, the adhesiveness is to a great extent dissipated when the film is extended, and the ratio of pulling-off force to tearing load is at least 1:1.5, the adhesive film being of the kind which is based on thermoplastic rubber and tackifying resins, with high elasticity and low plasticity.

8. Device according to Claim 1, characterized in that the end of the adhesive film designed as a grip is provided with a covering on both sides.

9. Device according to Claim 1, characterized in that the rear side of the adhesive film is covered with a release laminate, such as a siliconized release paper or a release film.

10. Device according to Claim 1, characterized in that there is a hook on the front side of the base plate.

11. Use of a base plate for a fastening device according to one of Claims 1-10, the rear side of the base plate having duct-like depressions in the region in which the strip of adhesive film is adhesively attached, these depressions extending at least partially beyond the region of the strip of adhesive film.

## Revendications

1. Dispositif de fixation autocollant détachable, ayant une plaque de fond, dont la face avant sert à la fixation et dont la face arrière présente un ruban d'une feuille adhésive des deux cotés collée de telle manière qu'une extrémité de la feuille adhésive dépasse hors de la plaque de fond en tant que languette de prise, la feuille adhésive étant telle que le collage obtenu grâce à elle soit à nouveau détachable grâce à une traction allongeant le ruban dans la direction du plan de collage,
caractérisé en ce que la face arrière de la plaque de fond présente des empreintes sous forme de canaux dans la zone dans laquelle le ruban de feuille adhésive est collé, ces empreintes se prolongeant au moins en partie par delà de la zone du ruban de feuille adhésive.

2. Dispositif selon la revendication 1, caractérisé en ce que les empreintes se déroulent verticalement et/ou horizontalement ou également d'une manière irrégulière sur la face arrière de la plaque de fond.

3. Dispositif selon la revendication 1, caractérisé en ce que les empreintes se croisent à peu près à angle droit.

4. Dispositif selon la revendication 1, caractérisé en ce que les empreintes mesurent en largeur et en profondeur environ 0,3-2,5 mm, en particulier 0,5-1,0 mm.

5. Dispositif selon la revendication 1, caractérisé en ce que les empreintes ont une distance les unes des autres d'au maximum environ 10-20 mm, en particulier au maximum de 15 mm.

6. Dispositif selon la revendication 1, caractérisé en ce que la feuille adhésive peut subir un allongement de manière élastique ou plastique avec ou sans support intermédiaire.

7. Dispositif selon la revendication 1, caractérisé en ce que l'adhésion de la feuille adhésive est inférieure à la cohésion, en ce que le pouvoir adhésif disparaît en grande partie lors de l'allongement de la feuille, et en ce que le rapport de la force de retrait à la force de déchirement est au moins de 1:1,5, la feuille adhésive étant une feuille à base de caoutchouc thermoplastique et de résines à pouvoir collant, ayant une élasticité élevée et une faible plasticité.

8. Dispositif selon la revendication 1, caractérisé en ce que l'extrémité de la feuille adhésive formée en tant que languette de prise est pourvue des deux cotés d'un recouvrement.

9. Dispositif selon la revendication 1, caractérisé en ce que la face arrière de la feuille adhésive est recouverte d'un stratifié de séparation, comme un papier de séparation traité aux silicones ou une feuille de séparation.

10. Dispositif selon la revendication 1, caractérisé en ce qu'un crochet se trouve sur la face avant de la plaque de fond.

11. Utilisation d'une plaque de fond pour un dispositif de fixation selon l'une quelconque des revendications 1-10, la face arrière de la plaque de fond présentant des empreintes sous forme de canaux dans la zone dans laquelle le ruban de feuille adhésive est collé, ces empreintes se prolongeant au moins en partie par delà la zone du ruban de feuille adhésive.
